# EUROPÄISCHE PATENTSCHRIFT

(11) **EP 4 241 048 B1**
(45) Veröffentlichungstag und Bekanntmachung des Hinweises auf die Patenterteilung: **18.11.2026**
(21) Anmeldenummer: 21823749.3
(22) Anmeldetag: 05.11.2021
(51) Int. Cl.: G01D 5/14

(54) **VERFAHREN UND VORRICHTUNG ZUR BESTIMMUNG EINER ABSOLUTEN DREHPOSITION EINER WELLE**
METHOD AND DEVICE FOR DETERMINING AN ABSOLUTE ROTATIONAL POSITION OF A SHAFT
PROCÉDÉ ET DISPOSITIF POUR DÉTERMINER UNE POSITION DE ROTATION ABSOLUE D'UN ARBRE

(30) Priorität: 06.11.2020 DE 102020006829
(43) Veröffentlichungstag der Anmeldung: 13.09.2023
(73) Patentinhaber: Lenord, Bauer & Co. GmbH, 46145 Oberhausen (DE)
(72) Erfinder: BREER, Reiner, 59069 Hamm (DE); HESSLING, André, 46485 Wesel (DE); NOBBE, Axel, 45257 Essen (DE); SCHUMANN, Carsten, 46284 Dorsten (DE); VELLING, Peter, 46049 Oberhausen (DE)
(74) Vertreter: Seyer & Nobbe Patentanwälte PartmbB
(86) Internationale Anmeldenummer: PCT/DE2021/200176
(87) Internationale Veröffentlichungsnummer: WO 2022/096072

(56) Entgegenhaltungen:
- EP-A1- 3 064 902
- DE-A1- 19 855 960
- US-A- 5 457 371
- BLAKLEY J J: "Two-dimensional position sensing using absolute-type encoder scheme employing pseudorandom binary arrays", ELECTRONICS LETTERS, IEE STEVENAGE, GB, vol. 36, no. 15, 20 July 2000 (2000-07-20), pages 1277 - 1278, XP006015467, ISSN: 0013-5194, DOI: 10.1049/EL:20000911

## Beschreibung

Die Erfindung betrifft ein Verfahren zur Erfassung einer absoluten Drehposition einer Welle unter Einsatz zumindest zweier rotatorischer Maßverkörperungen, welche eine synchrone Kopplung mit der Welle aufweisen, umfas-send Maßverkörperungen mit einer unterschiedlichen Anzahl von Teilungen, welche jeweils paarweise teilerfremd relativ prim sind, einer Zustandsermittlung der einzelnen Maßverkörperungen durch Sensoren, wobei für jede Maßverkörperung eine quantisierbare Zahl an rotatorischen Zuständen Ni erfasst wird, der Gesamtmessbereich des Erfassungssystems durch das Produkt N= πᵢ₌₁ Nᵢ der möglichen Zustände aller Maßverkörperungen bestimmt ist und jede Zustandskombination (a0, a1, a2,..., an) innerhalb des Gesamtmessbereiches N exakt einmal vorkommt, sodass zu jedem Zeitpunkt aus der Zustandskombination der Maßverkörperungen die absolute Position der Welle ermittelbar ist sowie eine Vorrichtung zur Anwendung des Verfahrens.

Zur Steuerung und Überwachung von großen Maschinenanlagen kommt es häufig darauf an, dass Einstellungen an der Maschinenanlage verändert werden müssen. Hierzu werden beispielsweise Einstellspindeln mit Wellen verwendet, welche über Handräder, Stellantriebe oder Positionsanzeiger bewegt werden. Zu diesem Zweck muss beispielsweise die Drehposition einer Welle innerhalb einer Umdrehung ggf. unter Berücksichtigung einer Vielzahl von einzelnen Umdrehungen genau erfasst werden. In der Regel werden die Umdrehung und ebenso die Winkelposition durch berührungslose Sensoren ermittelt. Hierbei steht im Vordergrund, dass die absolute Position der Welle eindeutig bestimmbar ist. Zu diesem Zweck werden beispielweise Permanentmagnete und Magnetfeldsensoren verwendet. Voraussetzung hierbei ist, dass die Magnetfeldsensoren jeweils die Position des Sensorrates eindeutig innerhalb einer Umdrehung oder Teilumdrehung erfassen können. Alternativ können optische, induktive oder kapazitive Positionserfassungen erfolgen, auch für diese gilt, dass die Position innerhalb einer Umdrehung eindeutig erfasst wird.

Aus dem Stand der Technik ist es bekannt, Getriebe zur Erfassung einer Umdrehungsanzahl zu verwenden, welche beispielsweise mit einer gleichen Untersetzung von zum Beispiel 1:16 ineinandergreifen und bei einer dreistufigen Bauform mit einer dreifachen Untersetzung 4.096 Umdrehungen beziehungsweise 2¹² Bit auflösen und messtechnisch erfassen können. Die Anzahl der Umdrehungen wird hierbei durch die Untersetzung bestimmt. Bei einer dreifachen Untersetzung somit 16 x 16 x 16 = 4096 Umdrehungen. Ferner ist aus dem Stand der Technik bekannt, die ermittelte Position der Welle digital zu erfassen, wie in der DE 19 658 440 C2 beschrieben. Die Patentschrift betrifft einen digitalen Positionsanzeiger mit einem Gehäuse, in dem ein Zählwerk mit Zahlenrollen auf einer Rollachse integriert ist und eine Antriebswelle zum Aufsetzen auf ein drehbares Element vorgesehen ist, wobei Zählwerk und Antriebswelle über ein Getriebe miteinander verbunden sind.

Eine analoge Positionsanzeige ist ferner aus der DE 10 044 130 C1 bekannt, bei der eine maschinenseitige Welle beispielsweise mit einer Spindelwelle gekoppelt wird, welche in einem Handrad integriert ist. Bei der Drehung des Handrades tritt hierbei direkt eine Veränderung der Position auf, welche analog angezeigt wird. Zu diesem Zweck muss bei der Drehbewegung ein Drehmoment übertragen werden, sodass ist eine formschlüssige Verbindung zu Maschinenwelle erforderlich ist. Aus der EP 3 150 972 A2 ist eine elektronische Erfassung mit einer Anzeige der Winkelposition bekannt.

Aus der DE 20 2015 102 907 U1 ist eine Positionsanzeige bekannt, welche mit einer Batterie ausgestattet ist, um die vorhandenen Elektronikkomponenten zu versorgen und die gespeicherten Messwerte dauerhaft zu speichern, um diese jederzeit wieder abzurufen. Hier besteht die Gefahr, dass bei einem Ausfall der Batterie die gespeicherten Informationen verloren gehen und die Positionsanzeige neu referenziert werden muss, beispielsweise durch Festlegung einer Nullpunkt Position. Derartige Referenzierenden sind sehr aufwendig und sollten nach Möglichkeit vermieden werden.

Aus der DE 19855960 A1 ist eine Vorrichtung und ein Verfahren zur Messung der Winkellage eines drehbaren Körpers bekannt, wobei Maßverkörperungen mit einer unterschiedlichen Anzahl von Teilungen, welche zudem paarweise teilerfremd sind, verwendet werden.

Aus dem US-Patent 5,457,371 ist ein digitaler Positionscodierer bekannt, welcher mithilfe von optischen Sensoren und einem Durchbruch in den verwendeten Zahnrädern eine Positionsermittlung der Antriebswelle vorschlägt.

Nachteilig ist bei dieser Ausführung, dass eine Zahnradkombination verwendet wird, welche in mehreren Ebenen angeordnet ist und damit eine gewisse Baugröße erforderlich macht und zudem durch die verwendeten Durchbrüche in den Zahnrädern keine sofortige Ermittlung der Drehposition nach einem Stillstand oder einem Spannungsausfall möglich ist.

Der vorliegenden Erfindung liegt die Aufgabenstellung zugrunde, ein Verfahren zur Erfassung einer Drehposition einer Welle sowie beispielhafte Ausführungsformen aufzuzeigen, welche die bekannten Nachteile aus dem Stand der Technik vermeiden und zudem eine jederzeit abrufbare Positionsangabe der Drehwelle mit hoher Auflösung ermöglichen.

Zur Lösung der Aufgabenstellung für das Verfahren ist vorgesehen, dass Maßverkörperungen eingesetzt werden, die teilweise ein Vielfaches der erforderlichen Teilung zur Bestimmung der Zustände aufweisen und zustandssynchron eingesetzt werden. Weitere vorteilhafte Ausgestaltungen des Verfahrens ergeben sich aus den Unteransprüchen.

Zur Erfassung der Drehposition einer Welle werden zumindest zwei, vorzugsweise drei Maßverkörperungen verwendet, welche in diesem Fall für das Verfahren Maßverkörperungen mit einer unterschiedlichen Anzahl von Teilungen aufweisen, welche jeweils paarweise teilerfremd relativ prim sind. Es liegen somit keine gemeinsamen Teiler vor, sodass über die Maßverkörperungen eine Zustandserfassung möglich ist. Hierbei besteht die Besonderheit, dass bei der Zustandsermittlung der einzelnen Maßverkörperungen durch entsprechende Sensoren für jede Maßverkörperung eine quantisierbare Zahl an rotatorischen Zuständen Nᵢ erfasst wird. Der Gesamtmessbereich eines solchen Erfassungssystems wird durch das Produkt N= πᵢ₌₁ Nᵢ der möglichen Zustände aller Maßverkörperungen bestimmt. Jede Zustandskombination (a₀, a₁, a₂,..., aₙ) innerhalb des Gesamtmessbereiches N kommt exakt nur einmal aufgrund der gewählten Teilung vor, sodass zu jedem Zeitpunkt aus der Zustandskombination der Maßverkörperungen die absolute Position der Welle ermittelt werden kann. Die Anzahl der Maßverkörperungen kann selbstverständlich ohne weiteres vergrößert werden, wenn darauf geachtet wird, dass die Teilung jeweils paarweise teilerfremd ist. Hierbei weisen die Maßverkörperungen teilweise ein Vielfaches der erforderlichen Teilung zur Bestimmung der Zustände auf. Ein Vielfaches der Teilung erhöht die Auflösung der Drehposition der Welle, wobei zumindest einzelne Maßverkörperungen ggf. auch sämtliche Maßverkörperungen kaskadiert eingesetzt werden können. Kaskadiert bedeutet in diesem Zusammenhang, dass nicht nur eine Maßverkörperung synchron mit der Welle gekoppelt ist, sondern die Maßverkörperung mit weiteren Maßverkörperungen synchron gekoppelt sein können. Auch bei dieser Gestaltung ist die Teilung paarweise relativ prim und es wird ein höherer Gesamtmessbereich erzielt.

Das vorteilhafte Verfahren zur Erfassung der Drehposition einer Welle wird nachstehend anhand von Ausführungsbeispielen erläutert.

Wenn beispielsweise drei Sensorzahnräder als Maßverkörperungen mit einer geeigneten unterschiedlichen Zähnezahl z.B. 17, 18 und 19 verwendet werden, welche eine synchrone Kopplung mit der Welle aufweisen und die Bedingung erfüllen, dass die Anzahl der Zähne paarweise teilerfremd relativ prim sind, kommt jede Zustandskombination nur einmal vor. Hierbei wird eine Drehbewegung der Welle direkt auf alle Sensorzahnräder übertragen. Es liegt eine direkte Kopplung der Sensorzahnräder mit einer Verzahnung der Welle vor, sodass mit jeder Drehbewegung der Welle die Sensorzahnräder mit bewegt werden. Die unterschiedliche Zähneanzahl wird als Teilung der Maßverkörperungen verwendet. Die Bewegung der Sensorzahnräder wird über Sensoren erfasst und somit ein Zustand detektiert, welcher für die drei Sensorzahnräder mit einer teilerfremden Anzahl von Zahnrädern exakt immer zu einer Zustandskombination führt. Bei einer zustandssynchronen Kopplung mit der Welle werden somit sämtliche Sensorzahnräder synchron mitbewegt und es kann zum Beispiel die jeweilige Position der Sensorzahnräder durch die Abtastung eines Permanentmagneten, welche mit den Sensorzahnrädern verbunden sind, durch beispielsweise Magnetfeldsensoren ermittelt werden. Das Verfahren arbeitet hierbei ohne Spannungsversorgung, weil die Drehung der Sensorzahnräder auch im energielosen Zustand erfolgt und beim Einschalten die Positionen der Sensorzahnräder sofort ermittelt werden können und jede nachfolgende Drehbewegung sofort erfasst werden kann und somit zu jedem Zeitpunkt eine absolut korrekt ermittelte Zustandskombination vorliegt. Diese eindeutige Zustandskombination entspricht einer bestimmten Anzahl von Umdrehungen und der jeweiligen Drehposition innerhalb einer Umdrehung der Welle. Wenn die Welle beispielsweise manuell angetrieben wird und die Drehbewegung über Stellglieder auf eine zu steuernde Fertigungsanlage übertragen wird, kann die exakte Position der jeweiligen Stellglieder in der Fertigungsanlage jederzeit ermittelt und überwacht werden. Eine Anzeige auf einem Display dient dabei zur direkten visuellen Kontrolle der eingestellten Position, während die Welle manuell verstellt wird. Anstelle einer manuellen Verstellung könnte über Stellantriebe eine elektromotorische Verstellung erfolgen.

Zur Unterstützung von Formatverstellungen bei einer Fertigungsanlage oder beispielsweise einer Abfüllanlage können mehrere dieser Anzeigen über geeignete elektronische Schnittstellen mit einer übergeordneten Anlagensteuerung verbunden werden, wobei über diese Anlagensteuerung die einzelnen Positionsfelder an die digitale Anzeige übertragen und auf dem integrierten Display dargestellt werden können, soweit eine manuelle Verstellung notwendig ist. Das Erreichen der gewünschten Zielposition kann durch alphanumerische Anzeigen oder graphische Symbole angezeigt werden. Mittels graphischer Symbole können darüber hinaus weitere Informationen sprachenunabhängig dargestellt werden, sodass beispielsweise die Richtung angezeigt wird, in der die Welle der digitalen Positionsanzeige zu bedienen ist.

Der besondere Vorteil des aufgezeigten Verfahrens nach dem vorgenannten Beispiel besteht hierbei darin, dass das Verfahren spannungsunabhängig durchgeführt werden kann und aufgrund der Positionen der einzelnen Maßverkörperungen, welche über die Sensoren ermittelt werden, ist eine sofortige Zustandsermittlung möglich, wobei jede Zustandskombination innerhalb des Gesamtmessbereiches nur einmal vorkommt und damit die Zustandskombination der Maßverkörperungen die absolute Position der Welle bestimmt. Die Zustandskombination sind hierbei einer bestimmten Anzahl von Umdrehungen der Welle und der Winkelposition der Welle innerhalb einer Umdrehung zugeordnet, um auf diese Weise die Position der Welle exakt ermitteln zu können.

In einem weiteren Ausführungsbeispiel kann die Welle mit zumindest einem Zahnrad als Maßverkörperung ausgestattet sein, welches ein Vielfaches der erforderlichen Teilung zur Bestimmung der Zustände aufweist und den Vorteil bietet, dass unabhängig von dem Durchmesser der Welle das Zahnrad einen beliebig gewählten Durchmesser aufweisen kann.

In einem weiteren Ausführungsbeispiel kann als Maßverkörperung eine Zahnstange mit einer Vielzahl von Zähnen zur Bestimmung der Position einer Sensorik verwendet werden, welche entlang des Zahnrades verfahrbar ist. In diesem Fall kann die Sensorik Bestandteil eines Schlittens einer Maschinenkomponente, beispielsweise einer Webmaschine sein. Bei beiden zuletzt genannten Ausführungsbeispielen besitzen die Zahnräder der Sensorik einen deutlich kleineren Durchmesser, welche entweder mit dem Zahnrad der Welle oder der Zahnstange zustandssynchron kämmen.

In Ausgestaltung der Erfindung ist vorgesehen, dass drei oder vier rotatorische Maßverkörperungen mit der Welle gekoppelt sind, um die Anzahl der möglichen Zustandskombinationen zu erhöhen. In der Regel reichen bereits zwei rotatorische Maßverkörperungen aus, wobei aber vorzugsweise drei oder vier rotatorische Maßverkörperungen mit der Welle gekoppelt sind, um einen höheren Gesamtmessbereich des Systems zu erreichen. Hierbei liegt immer eine direkte synchrone oder schlupffreie Kopplung der Maßverkörperung mit der Welle vor. Eine schlupffreie Kopplung kann beispielsweise aus einem Zahnriemen bestehen, welcher mit der Maßverkörperung der Welle und der Sensorik gekoppelt ist.

In weiterer Ausgestaltung der Erfindung ist vorgesehen, dass die absolute Position der Welle oder Position auf der Zahnstange rechnerisch über die Zustandskombination ermittelt wird. Durch die Auswertung der Zustandskombination kann die Position der Welle oder Sensorik auch nach einem Stillstand oder Spannungsausfall jederzeit neu ermittelt werden, ohne dass aufwendige Messungen oder eine neue Referenzierung erforderlich ist.

Als Maßverkörperungen können beispielsweise Permanentmagnete oder signalbeeinflussende Elemente verwendet werden. Soweit beispielsweise Permanentmagnete eingesetzt werden, können mithilfe von Sensorelementen die Teilungen abgetastet und damit eine Zustandsposition erfasst werden. Soweit signalbeeinflussende Elemente, wie beispielweise metallische Kodierungen verwendet werden, können Magnetfeldsensoren oder kapazitive Sensoren verwendet werden, welche die absolute Position der Welle über den jeweiligen Zustand der Maßverkörperungen exakt erfassen.

Das angewendete Messprinzip zur Positionserfassung basiert hierbei beispielsweise auf einer berührungslosen Abtastung von Permanentmagneten der Maßverkörperungen mittels geeigneter Sensoren. Die Maßverkörperungen befinden sich jeweils in einem direkten Eingriff mit der Welle. Die Sensoren können beispielsweise aus Hall- oder magnetoresistiven Sensoren bestehen, solange sie jeweils die Position der Maßverkörperung eindeutig innerhalb einer Umdrehung oder Teilumdrehung erfassen.

Ferner können die jeweiligen Zustände der Maßverkörperung durch optische, kapazitive, induktive oder widerstandsbehaftete Sensoren erfasst und ausgewertet werden, um den jeweiligen Zustand zu ermitteln und über die Zustandskombination die absolute Position der Welle zu bestimmen.

Beispielhaft kann für das Verfahren eine Maßverkörperung aus Sensorzahnrädern mit einer unterschiedlichen Anzahl von Zähnen als Teilung verwendet werden, wie im ersten Ausführungsbeispiel beschrieben, welche die Möglichkeit bieten, den jeweiligen Zustand der einzelnen Sensorzahnräder zu ermitteln. Alternativ besteht die Möglichkeit, dass die Maßverkörperungen aus einer Codierscheibe mit einer unterschiedlichen Anzahl von signalverändernden Elementen als Teilung besteht. Für die jeweiligen Teilungen, seien es die Zähne oder die signalverändernden Elemente besteht hierbei immer die Randbedingung, dass die Teilung paarweise relativ prim ist.

Der besondere Vorteil des aufgezeigten Verfahrens besteht hierbei darin, dass auch im Falle des Stillstandes oder nach einem Spannungsabfall eine zuverlässige Ermittlung der Drehposition einer Welle und die Anzahl der Umdrehungen jederzeit möglich ist und die hierbei vorliegenden Zustände der Maßverkörperungen nur jeweils einmal vorkommen, sodass eine direkte Zuordnung zu der absoluten Position der Welle beispielsweise über eine Zustandstabelle möglich ist. Die Position der Welle kann hierbei sowohl nach einem Spannungsausfall oder nach einem Stillstand einer Fertigungsanlage sofort ermittelt werden, ohne dass eine aufwendige Referenzierung erforderlich ist. Der Gesamtmessbereich des Erfassungssystems kann hierbei sukzessive durch die Erhöhung der Maßverkörperungen verbessert und somit individuell an jede Fertigungsanlage angepasst werden.

Zur Lösung der Aufgabenstellung werden beispielhaft für die Anwendung des Verfahrens einzelne Vorrichtungen nachstehend beschrieben, welche zur Erfassung einer einschaltunabhängigen Drehposition einer Welle verwendbar sind.

Eine erste Ausführung umfasst eine Vorrichtung umfassend zumindest ein Gehäuse mit einer manuell drehbaren Hohlwelle, deren absolute Drehposition zu ermitteln ist, wobei die Drehposition der Hohlwelle über Stellglieder auf eine zu steuernde Fertigungsanlage übertragbar ist und wobei eine direkte Kopplung der Hohlwelle mit zumindest zwei Maßverkörperungen der Vorrichtung erfolgt, welche eine unterschiedliche Anzahl von Teilungen aufweisen, die jeweils paarweise teilerfremd relativ prim und von einem Sensor abtastbar sind. Unter Zugrundelegung des Verfahrens ist hierbei erfindungsgemäß vorgesehen, dass die Maßverkörperungen zumindest teilweise ein Vielfaches der erforderlichen Teilung zur Bestimmung der Zustände aufweisen und zustandssynchron angeordnet sind.

Die Vorrichtung offenbart somit ein Messsystem, das auf einer Welle montiert werden kann und die Winkelposition dieser Welle innerhalb einer Umdrehung sowie die Anzahl der Umdrehungen erfasst und auf einem Display anzeigen kann. Die Anzeige auf einem Display dient dabei zur direkten visuellen Kontrolle der eingestellten Position, während die Welle manuell verstellt wird. Die manuelle Verstellbarkeit der Hohlwelle steht deshalb im Vordergrund, weil die Hohlwelle über Stellglieder unmittelbar Einfluss auf eine zu steuernde Fertigungsanlage ausübt. Die Fertigungsanlage kann beispielsweise aus einer größeren Abfüllanlage für Getränke bestehen, wobei bei jeder Umstellung auf eine neue Flaschensorte entsprechende Stellglieder in der Regel manuell oder elektromotorisch eingestellt werden müssen. Hierzu ist es notwendig entweder über ein Stellglied oder alternativ manuell eine Verstellung vorzunehmen, wobei in diesem Fall vorgesehen ist, dass eine drehbare Hohlwelle in einem Gehäuse aufgenommen ist, welches gleichzeitig mit einem Display ausgestattet ist, um die aktuelle Position der Hohlwelle anzuzeigen. Zur Unterstützung der Formateinstellung einer Abfüllanlage können mehrere dieser Anzeigen über geeignete elektronische Schnittstellen mit einer übergeordneten Anlagensteuerung verbunden werden, sodass eine Überwachung der gesamten Anlage möglich ist. Über die Anlagensteuerung werden die einzustellenden Positionswerte an die digitalen Anzeigen übertragen und auf dem integrierten Display angezeigt. Das Erreichen der Zielposition kann beispielsweise durch eine alphanumerische Anzeige und/oder graphische Symbole erfolgen. Mittels graphischer Symbole besteht der Vorteil, dass die Informationen sprachenunabhängig dargestellt werden kann. So kann beispielsweise die Richtung angezeigt werden, in der die digitale Positionsanzeige zu bedienen ist. Aufgrund der hohen Leuchtintensität der verwendeten Displays unterstützt deren helles Blinken das Auffinden aller Anzeigen in komplexen Maschinen und langen Produktionsstraßen. Insofern kann auf die Anzeige durch LEDs verzichtet werden.

Ein weiteres nicht zur beanspruchten Vorrichtung gehörendes Beispiel betrifft eine Welle mit einem gegebenenfalls sehr kleinen oder sehr großen Durchmesser. Unabhängig von dem Wellendurchmesser wird in diesem Fall eine Maßverkörperung in Form eines Zahnrades verwendet, welches einerseits direkt mit der Welle gekoppelt werden kann und andererseits beispielsweise die Möglichkeit bietet einzelne Zahnradsegmente einzusetzen, die besonders kostengünstig hergestellt werden können. In diesem Fall besteht beispielsweise die Möglichkeit Kunststoffzahnräder einzusetzen, die aus mehreren Segmenten bestehen und unmittelbar miteinander verbunden und mit der Welle gekoppelt werden. Der Durchmesser des Zahnrades als Maßverkörperung wird hierbei so gewählt, dass ein Vielfaches der erforderlichen Teilung vorliegt, sodass eine hohe Auflösung erzielt werden kann. Mithilfe eines Tiefpassfilters können in einem solchen Fall Störstellen, beispielsweise Übergangsstellen der einzelnen Segmente herausgefiltert und insofern zuverlässige Signale generiert werden, welche unter Anwendung des erfindungsgemäßen Verfahrens eine exakte Positionsbestimmung der Welle hinsichtlich der Drehposition und der vorliegenden Umdrehungen ermöglicht. Die hierbei verwendete Sensorik ist ebenfalls mit Sensorzahnrädern ausgestattet, die mit der Maßverkörperung der Welle kämmen, wobei deren Durchmesser deutlich kleiner gestaltet sein kann. Dadurch, dass die Sensorzahnräder der Sensorik zustandssynchron mit der Maßverkörperung der Welle kämmen und gegebenenfalls zusätzlich kaskadiert angeordnet sein können, ist einerseits eine hohe Auflösung und andererseits ein großer Messbereich erzielbar.

Ein weiteres nicht zur beanspruchten Vorrichtung gehörendes Beispiel besitzt eine Zahnstange als Maßverkörperung, auf der sich eine Sensorik mit Sensorzahnrädern befindet, die wiederum mit der Zahnstange kämmen. Die Zahnstange als solche bietet bereits ein Vielfaches der erforderlichen Teilung zur Bestimmung der einzelnen Zustände zur Positionsbestimmung der Sensorik und durch die Verwendung von Sensorzahnräder der Sensorik mit einem kleinen Durchmesser kann durch eine zustandssynchrone Koppelung mit der Zahnstange ein großer Messbereich realisiert werden. In diesem Fall besteht ebenfalls die Möglichkeit eine kaskadierte Anordnung von Sensorzahnrädern einzusetzen. Die verwendete Sensorik kann hierbei Bestandteil eines Schlittens sein, welche entlang der Zahnstange verfahrbar ist und somit jederzeit eine Positionsermittlung gegenüber der Zahnstange ermöglicht. Bei den Schlitten kann es sich beispielsweise um einen Webschlitten handeln.

Die Vorrichtungen beruhen ferner auf einer berührungslosen Abtastung von Maßverkörperungen, wobei vorzugsweise Sensorzahnräder mit Permanentmagneten zum Einsatz kommen können, welche mit Magnetfeldsensoren abgetastet werden. Die Maßverkörperungen, in den Ausführungsbeispielen die Sensorzahnräder, befinden sich jeweils in einem direkten Eingriff mit einer Maßverkörperung der Welle, Zahnstange oder der Hohlwelle, wobei jede Drehbewegung der Welle beziehungsweise Hohlwelle direkt auf die Sensorzahnräder übertragen wird. Ebenso können die Sensorzahnräder der Sensorik bei einer Bewegung gegenüber der Zahnstange in eine Drehung versetzt und abgetastet werden. Die Magnetfeldsensoren können hierbei Hall- oder magnetoresistive Sensoren sein und müssen nur jeweils die Position des Sensorzahnrades eindeutig innerhalb einer Umdrehung oder Teilumdrehung erfassen. Ebenso sind andere optische, induktive oder kapazitive Positionserfassungen möglich, solange die Position innerhalb eines definierten Umdrehungsbereiches eindeutig bestimmt ist.

Für die Maßverkörperungen werden unterschiedliche Teilungen verwendet, welche jeweils paarweise teilerfremd relativ prim sind. Die Anzahl der Maßverkörperungen kann beliebig erweitert werden, hierbei muss nur sichergestellt sein, dass jeweils zwei Maßverkörperungen teilerfremd sind, um doppelte Zustände der jeweiligen Maßverkörperungen zu vermeiden. Soweit beispielsweise drei Maßverkörperungen mit einer Teilung von 17, 18 und 19 verwendet werden, können bereits 5.800 Zustände aufgelöst werden, sodass ein großer Gesamtmessbereich mit entsprechender Genauigkeit vorliegt. Die einzelnen Maßverkörperungen werden hierbei durch Sensoren abgetastet, um den jeweiligen Zustand zu bestimmen, wobei die Zustandskombination sämtlicher Maßverkörperungen exakt nur einmal vorkommt, da die Maßverkörperungen synchron mit der Welle, Hohlwelle oder der Zahnstange gekoppelt sind. Über die Zustandskombination kann somit die absolute Position der Welle oder der Sensorik gegenüber der Zahnstange ermittelt werden. Hierbei wird die Tatsache ausgenutzt, dass eine Zustandsermittlung der einzelnen Maßverkörperungen durch Sensoren erfolgt, wobei jede Maßverkörperung durch eine quantisierbare Zahl an rotatorischen Zuständen Nᵢ definiert ist. Der Gesamtmessbereich der Maßverkörperungen wird durch das Produkt N= πᵢ₌₁ Nᵢ der möglichen Zustände aller Maßverkörperungen bestimmt.

Vorzugsweise werden drei oder vier rotatorische Maßverkörperungen mit der Welle gekoppelt, um den gewünschten Gesamtmessbereich zu erhalten. Die Kopplung mit der Welle erfolgt hierbei direkt synchron oder es liegt eine schlupffreie Kopplung der Maßverkörperung mit der Welle vor, beispielsweise durch einen Zahnriemen.

Die absolute Position der Welle wird mittels Abtastung beziehungsweise Erfassung der Winkelpositionen der einzelnen Maßverkörperungen und anschließender Berechnung bestimmt. Auf diese Weise kann somit jederzeit eine absolute Positionsbestimmung sowohl nach Stillstand der Fertigungsanlage oder einem Spannungsausfall erfolgen. Gleiches gilt für eine Zahnstange mit Sensorik.

In der Regel werden nur Maßverkörperungen eingesetzt, die unmittelbar direkt mit der Welle oder Hohlwelle synchron gekoppelt sind und beispielsweise aus Zahnrädern bestehen können. Es besteht aber die Möglichkeit, dass eine Maßverkörperung kaskadiert und zustandssynchron mit mehreren Sensorzahnrädern gekoppelt ist. Im Falle von Sensorzahnrädern kann es sich um zwei gekoppelte zustandssynchrone Sensorzahnräder handeln, wobei zusätzlich durch die kaskadierte Anordnung der Sensorzahnräder der Gesamtmessbereich erhöht wird. Hierbei besteht ohne Weiteres die Möglichkeit, dass einzelne Maßverkörperungen ein Vielfaches der erforderlichen Teilung zur Bestimmung der Zustände aufweisen, sodass die Auflösung ebenfalls erhöht wird.

Vorzugsweise können die Maßverkörperungen aus Dauer- oder Permanentmagneten oder signalbeeinflussenden Elementen bestehen, welche mithilfe von Sensorelementen ausgewertet werden können. Als Sensorelemente kommen optische, kapazitive, induktive oder widerstandsbehaftete Sensoren infrage, welche den jeweiligen Zustand der Maßverkörperungen ermitteln. Alternativ zu Zahnrädern und Sensorzahnrädern kann auch eine Maßverkörperung in Form einer Codierscheibe mit einer unterschiedlichen Anzahl von signalbeeinflussenden Elementen als Teilung verwendet werden, wobei wiederum sichergestellt sein muss, dass die Anzahl von Teilungen jeweils paarweise teilerfremd relativ prim sind. In diesem Fall werden vorzugsweise optische oder magnetische Sensoren verwendet. Durch die teilerfremde Ausgestaltung der Maßverkörperungen wird die Möglichkeit geschaffen, eine Zustandskombination mit einem großen Gesamtmessbereich bei entsprechender Anzahl von Codierungen oder Verzahnungen zu erzielen und dadurch, dass jede Zustandskombination innerhalb des Gesamtmessbereiches exakt nur einmal vorkommt, kann zu jedem Zeitpunkt aus der Zustandskombination der Maßverkörperungen die absolute Position der Welle oder der Sensorik gegenüber einer Zahnstange ermittelt werden.

Sowohl das Verfahren als auch die Vorrichtung zeichnen sich dadurch aus, dass diese spannungsfrei arbeitet und somit auch bei einem Stillstand der Fertigungsanlage oder bei einem neuen Anfahren beziehungsweise Stromausfall eine zuverlässige Aussage über die Wellenposition oder die Position der Sensorik gegenüber einer Zahnstange gewährleistet.

Die Erfindung wird im Weiteren anhand der Ausführungsbeispiele in den Figuren näher erläutert.

Es zeigt
- Fig. 1: in einer Frontansicht und Seitenansicht eine nur schematisch dargestellte Positionsanzeige,
- Fig. 2: in einer schematischen Frontansicht eine erste Anordnung von Sensorzahnrädern,
- Fig. 3: in einer schematischen Frontansicht eine zweite Anordnung von Sensorrädern,
- Fig. 4: in einer schematischen Frontansicht eine dritte Anordnung der Sensorräder in einer kaskadierten Form,
- Fig. 5: in einer schematischen Frontansicht eine Anordnung gemäß Figur 3 mit Permanentmagneten,
- Fig. 6: in einer schematischen Seitenansicht ein Ausführungsbeispiel der Positionsanzeige mit induktiver Positionsbestimmung der Welle,
- Fig. 7: in einer schematischen Ansicht zwei mögliche Varianten einer Welle mit einer Maßverkörperung und Sensorik und
- Fig. 8: in einer schematischen Ansicht eine Zahnstange mit Sensorik.

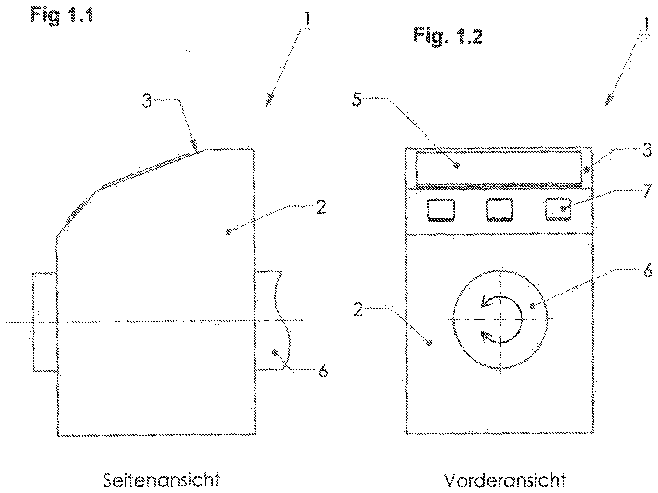

Figur 1 zeigt in einer schematischen Frontansicht und einer Seitenansicht eine Positionsanzeige 1. Die Positionsanzeige 1 besteht aus einem Gehäuse 2 mit einer Abschrägung 3. Die Abschrägung 3 ist mit einem grafischen Display 5 ausgestattet. Eine manuell drehbare Hohlwelle 6 befindet sich in der unteren Hälfte des Gehäuses 2, wobei in diesem Fall keine Lagerelemente oder Halterungen für die Hohlwelle 6 gezeigt sind. Die Hohlwelle 6 kann manuell in beiden Richtungen gedreht werden, um eine vorgegebene Positionseinstellung einzustellen. Die Hohlwelle 6 ist im Weiteren mit nicht dargestellten Stellgliedern verbunden, sodass eine manuelle Drehung der Hohlwelle sich unmittelbar auf die zu steuernde Fertigungsanlage übertragen lässt. Im Ausführungsbeispiel sind im Weiteren drei Taster 7 gezeigt, welche eine Konfiguration und Parametrierung des Gerätes ermöglichen.

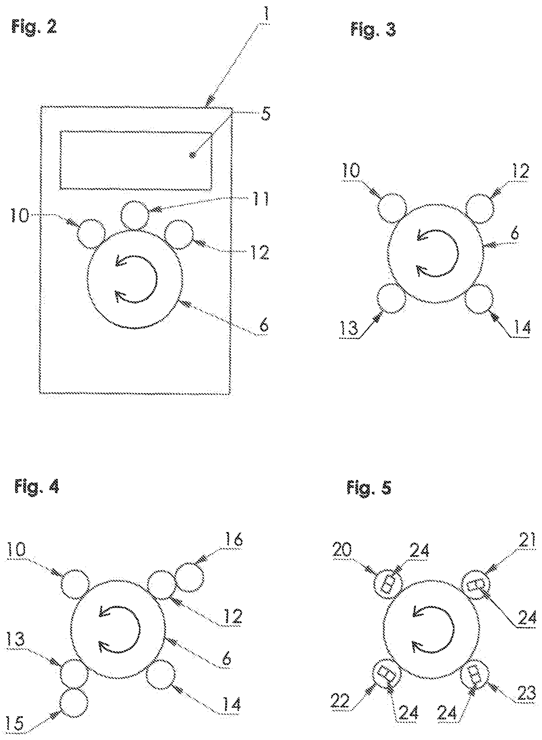

Die Positionsanzeige 1 wird bei einer größeren Fertigungsanlage in mehrfacher Ausführung dazu verwendet, um bestimmte Steuerungen über Stellglieder an der Fertigungsanlage zu übertragen. Soweit es sich beispielsweise um eine Abfüllanlage für Flaschen handelt kann mithilfe der Positionsanzeige 1 eine Anpassung an einen anderen Flaschentyp erfolgen, wobei die gezeigte Positionsanzeige zur manuellen Verstellung vorgesehen ist. Alternativ könnten aber auch Stellantriebe vorgesehen werden, welche von einer zentralen Position ferngesteuert werden. Zur Ermittlung der Drehposition der Hohlwelle 6 wird das erfindungsgemäße Verfahren angewendet, und zwar werden Maßverkörperungen eingesetzt, die unmittelbar synchron mit der Hohlwelle 6 gekoppelt sind. Die Position der einzelnen Maßverkörperungen ist aus den nachfolgenden Figuren 2 bis 5 ersichtlich, wobei das erfindungsgemäße Verfahren angewendet wird, um eine Zustandskombination ( a₀, a₁, a₂,..., aₙ) zu ermitteln und hieraus die absolute Drehposition der Hohlwelle zu bestimmen.

Figur 2 zeigt in einer schematischen Ansicht die Positionsanzeige 1 mit der Hohlwelle 6 sowie drei Maßverkörperungen 10, 11, 12, welche synchron mit der Hohlwelle 6 gekoppelt sind. Mithilfe dieser Maßverkörperungen 10, 11, 12 besteht bereits die Möglichkeit unter Berücksichtigung einer ausgewählten Teilung, welche relativ prim ist, einen Gesamtmessbereich von ca. 5.800 Zuständen zu erfassen. Die Maßverkörperungen 10, 11, 12 weisen eine teilerfremde Teilung auf, sodass die Position der Hohlwelle 6 auch nach mehreren Umdrehungen hinsichtlich der Umdrehungsanzahl und der Winkelposition exakt bestimmt werden kann.

Figur 3 zeigt in einer schematischen Ansicht eine weitere Ausführungsform einer Hohlwelle 6, welche mit vier Maßverkörperungen 10, 12, 13, 14, versehen ist. Durch die höhere Anzahl von Maßverkörperungen 10, 12, 13, 14 wird ein größerer Gesamtmessbereich der Positionsanzeige 1 erreicht.

Figur 4 zeigt in einer schematischen Ansicht die Hohlwelle 6 mit vier Maßverkörperungen 10, 12, 13, 14 gemäß Figur 3, wobei die Maßverkörperungen 12, 13 eine kaskadierte Anordnung aufweisen und mit zwei weiteren Maßverkörperungen 15, 16, synchron gekoppelt sind. Durch die weitere Verwendung von Maßverkörperungen 15, 16 kann nochmals der Messbereich der Positionsanzeige 1 verbessert werden. Hierbei ist es nicht von Relevanz, ob die Maßverkörperungen kaskadiert oder direkt mit der Hohlwelle 8 gekoppelt werden.

Figur 5 zeigt in einer schematischen Ansicht die Hohlwelle 6 mit Maßverkörperungen 20, 21, 22, 23, wobei jede Maßverkörperung 20, 21, 22, 23 mit einem Permanentmagneten 24 ausgestattet ist. Die Permanentmagnete 24 werden durch die synchrone Ankopplung an die Hohlwelle 6 bei jeder Drehbewegung der Hohlwelle 6 mitgedreht, sodass über nicht dargestellte Sensoren die Drehposition der Permanentmagnete 24 erfasst werden können. Aufgrund der teilerfremden Teilung der Maßverkörperungen 20, 21, 22, 23 kann somit wie in den vorhergehenden Beispielen eine exakte Bestimmung der Wellendrehung und Wellenposition innerhalb einer Umdrehung festgestellt werden. Die Besonderheit dieser Maßverkörperung besteht darin, dass die Funktionsweise auch im spannungslosen Zustand gegeben ist und nach Stillstand der Welle und Wiederhochfahren einer Fertigungsanlage die ermittelten Umdrehungszahlen und Drehpositionen der Hohlwelle 6 sofort erneut über die Sensoren ermittelt werden können.

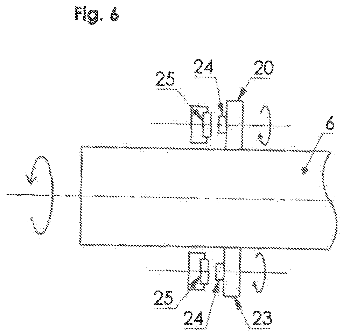

Figur 6 zeigt in einer schematischen Ansicht die Funktionsweise der Permanentmagnete 24 in Zusammenhang mit einem Sensor 25. Jede Maßverkörperung 20, 21, 22, 23 ist mit einem Permanentmagneten 24 bestückt und mit der Hohlwelle 6 gekoppelt, sodass eine Drehbewegung der Hohlwelle 6 unmittelbar auf die Maßverkörperung 20, 21, 22, 23 übertragen wird. Durch die feste Verbindung der Maßverkörperungen 20, 21, 22, 23 mit dem Permanentmagneten 24 werden diese mitgedreht und über die Sensoren 25 kann die Position der Permanentmagneten 24 in der jeweiligen Drehrichtung eindeutig ermittelt werden. Dadurch, dass die Maßverkörperungen 20, 21, 22, 23 teilerfremd sind ergibt sich bei einer Drehung der Hohlwelle 6 für jede Drehposition eine Zustandskombination, die nur einmal vorkommt und somit die Anzahl der Drehungen der Hohlwelle 6 sowie die Drehposition innerhalb einer Umdrehung exakt festgelegt sind.

Die verschiedenen Ausführungsformen der Hohlwelle 6 mit Maßverkörperungen sind nur als beispielhaft anzusehen. Es besteht ohne weiteres die Möglichkeit andere Ausführungsvarianten zu verwenden, welche auf Basis des erfindungsgemäßen Verfahrens eingesetzt werden.

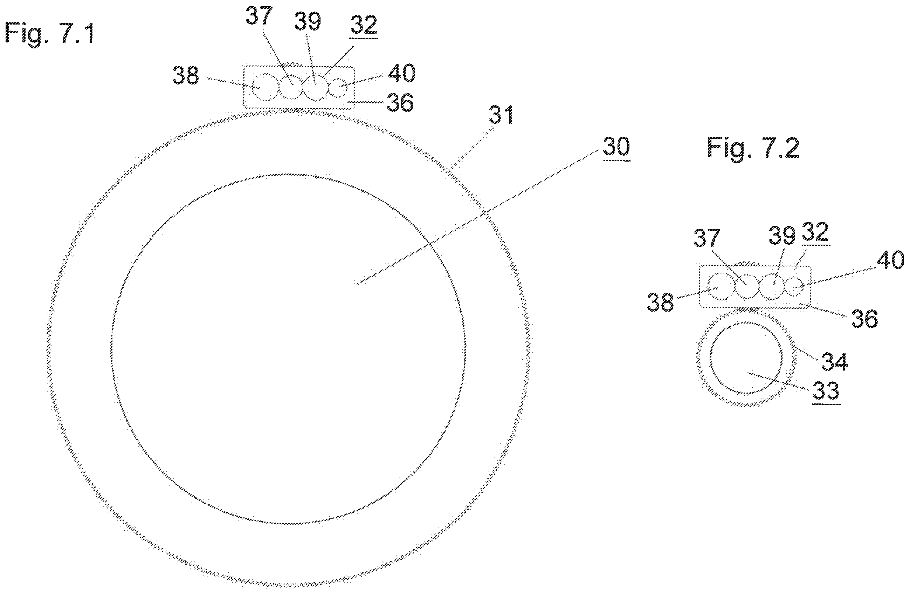

Figur 7 zeigt in einer schematischen Ansicht zwei Lösungen für eine große Welle 30 mit einer Maßverkörperung 31 und einer Sensorik 32 sowie einer kleinen Welle 33 mit einer Maßverkörperung 34 und einer Sensorik 32. Die beiden Welle 30, 33 besitzen verschiedene Durchmesser, wobei die jeweiligen Maßverkörperungen 31, 34 unabhängig von dem Wellendurchmesser sind. Die Sensorik ist schematisch in beiden Fällen in Form eines Gehäuses 36 mit einem ersten Sensorzahnrad 37 und weiteren kaskadenförmigen Sensorzahnrädern 38, 39, 40 dargestellt, sodass eine kaskadierte Anordnung der Sensorzahnräder 37, 38, 39, 40 vorliegt. Das erste Sensorzahnrad 37 kämmt im Falle der Welle 30 mit der Maßverkörperung 31 und im Falle der Welle 33 mit der Maßverkörperung 34.

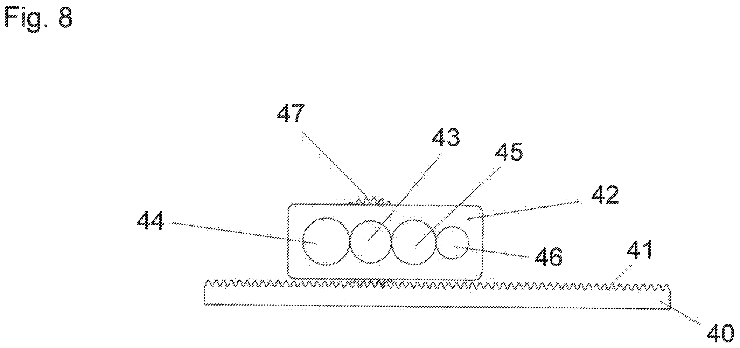

Figur 8 zeigt in einer schematischen Ansicht ein weiteres Ausführungsbeispiel mit einer Zahnstange 40 und der entsprechenden Verzahnung 41. Eine Sensorik 42 mit einem ersten Sensorzahnrad 43 ist im weiteren mit einer kaskadierten Anordnung von Sensorzahnrädern 44, 45, 46 ausgestattet. Das erste Sensorzahnrad 43 kämmt mit seinen Zähnen 47 mit der Zahnstange 40, wobei auch in diesem Fall die Sensorik 42 eine kaskadierte Anordnung weiterer Sensorzahnräder 43, 44, 45, 46 aufweist.

Beide Ausführungsformen sowohl für die Wellen 30, 33 als auch für die Zahnstange 40 ermöglichen eine hohe Auflösung und einen großen Messbereich aufgrund der kaskadierten Anordnung und der zustandssynchronen Kopplung der einzelnen Sensorzahnräder 37, 38, 39, 40, 43, 44, 45, 46 der Sensorik 32, 42 mit der entsprechenden Maßverkörperung.

### Bezugszeichenliste

- 1: Positionsanzeige
- 2: Gehäuse
- 3: Abschrägung
- 5: Display
- 6: Hohlwelle
- 7: Taster
- 10: Maßverkörperung
- 11: Maßverkörperung
- 12: Maßverkörperung
- 13: Maßverkörperung
- 14: Maßverkörperung
- 15: Maßverkörperung
- 16: Maßverkörperung
- 20: Maßverkörperung
- 21: Maßverkörperung
- 22: Maßverkörperung
- 23: Maßverkörperung
- 24: Permanentmagnet
- 25: Sensor
- 30: Welle
- 31: Maßverkörperung
- 32: Sensorik
- 33: Welle
- 34: Maßverkörperung
- 35: Sensorik
- 36: Gehäuse
- 37: Sensorzahnrad
- 38: Sensorzahnrad
- 39: Sensorzahnrad
- 40: Zahnstange
- 41: Verzahnung
- 42: Sensorik
- 43: Zahnrad
- 44: Sensorzahnrad
- 45: Sensorzahnrad
- 46: Sensorzahnrad
- 47: Zähne

## Patentansprüche

1. Verfahren zur Erfassung einer absoluten Drehposition einer Welle (30, 33) unter Einsatz zumindest zweier rotatorischer Maßverkörperungen (10, 11, 12, 13, 14, 15, 16, 20, 21, 22, 23, 31, 34) welche eine synchrone Kopplung mit der Welle (30, 33) aufweisen, umfassend Maßverkörperungen (10, 11, 12, 13, 14, 15, 16, 20, 21, 22, 23, 31, 34) mit einer unterschiedlichen Anzahl von Teilungen, welche jeweils paarweise teilerfremd, relativ prim sind, einer Zustandsermittlung der einzelnen Maßverkörperungen (10, 11, 12, 13, 14, 15, 16, 20, 21, 22, 23, 31, 34) durch Sensoren (25), wobei für jede Maßverkörperung (10, 11, 12, 13, 14, 15, 16, 20, 21, 22, 23, 31, 34) eine quantisierbare Zahl an rotatorischen Zuständen Ni erfasst wird, der Gesamtmessbereich des Erfassungssystems durch das Produkt $N = {π}_{ι = 1}^{n} {N}_{i}$ der möglichen Zustände aller Maßverkörperungen (10, 11, 12, 13, 14, 15, 16, 20, 21, 22, 23, 31, 34) bestimmt ist und jede Zustandskombination (a0, a1, a2,..., an) innerhalb des Gesamtmessbereiches N exakt einmal vorkommt, sodass zu jedem Zeitpunkt aus der Zustandskombination der Maßverkörperungen (10, 11, 12, 13, 14, 15, 16, 20, 21, 22, 23, 31, 34) die absolute Position der Welle (30, 33) ermittelbar ist,
wobei die Maßverkörperungen (10, 11, 12, 13, 14, 15, 16, 20, 21, 22, 23, 31, 34) zustandssynchron eingesetzt werden,
**dadurch gekennzeichnet, dass** die Maßverkörperungen (10, 11, 12, 13, 14, 15, 16, 20, 21, 22, 23, 31, 34) teilweise ein Vielfaches der erforderlichen Teilung zur Bestimmung der Zustände aufweisen.

2. Verfahren nach Anspruch 1,
**dadurch gekennzeichnet,**
**dass** zumindest einzelne Maßverkörperungen (10, 11, 12, 13, 14, 15, 16, 20, 21, 22, 23, 31, 34) kaskadiert eingesetzt werden.

3. Verfahren nach Anspruch 1 oder 2,
**dadurch gekennzeichnet**,
drei oder mehrere rotatorische Maßverkörperungen (10, 11, 12, 13, 14, 15, 16, 20, 21, 22, 23, 31, 34) mit der Welle (30, 33) gekoppelt sind, und/oder dass eine direkte synchrone oder schlupffreie Kopplung der Maßverkörperungen (10, 11, 12, 13, 14, 15, 16, 20, 21, 22, 23, 31, 34) mit der Welle (30, 33) vorliegt.

4. Verfahren nach Anspruch 1, 2 oder 3,
**dadurch gekennzeichnet,**
**dass** die absolute Position der Welle (30, 33) rechnerisch über die Zustandskombination (ao, a₁, a₂,..., aₙ) ermittelt wird, und/oder dass eine absolute Positionsbestimmung nach Stillstand oder Spannungsausfall über die Zustandskombination (a₀, a₁, a₂,..., aₙ) ermittelt wird.

5. Verfahren nach einem der Ansprüche 1, 2, 3 oder 4,
**dadurch gekennzeichnet,**
**dass** die Maßverkörperungen (10, 11, 12, 13, 14, 15, 16, 20, 21, 22, 23, 31, 34) aus Permanentmagneten (24) oder signalbeeinflussenden Elementen bestehen, und/oder dass die Zustände der Maßverkörperungen (10, 11, 12, 13, 14, 15, 16, 20, 21, 22, 23, 31, 34) durch optische, kapazitive, induktive oder widerstandsbehaftete Sensoren (25) ausgewertet werden.

6. Verfahren nach einem der Ansprüche 1 bis 5,
dass die Maßverkörperung (10, 11, 12, 13, 14, 15, 16, 20, 21, 22, 23, 31, 34) aus Sensorzahnrädern (37, 38, 39, 40, 43, 44, 45, 46) mit einer unterschiedlichen Anzahl von Zähnen (47) als Teilung besteht, oder dass die Maßverkörperung (10, 11, 12, 13, 14, 15, 16, 20, 21, 22, 23, 31, 34) aus einer Kodierscheibe mit einer unterschiedlichen Anzahl von signalveränderten Elementen als Teilung besteht.

7. Vorrichtung zur Erfassung einer einschaltunabhängigen Drehposition einer Welle (30, 33), umfassend zumindest ein Gehäuse (2) mit einer manuell drehbaren Hohlwelle (6), deren absolute Drehposition zu ermitteln ist, wobei die Drehposition der Hohlwelle (6) über Stellglieder auf eine zu steuernde Fertigungsanlage übertragbar ist und wobei eine direkte Kopplung der Hohlwelle (6) mit zumindest zwei Maßverkörperungen (10, 11, 12, 13, 14, 15, 16, 20, 21, 22, 23) der Vorrichtung erfolgt, welche eine unterschiedliche Anzahl von Teilungen aufweisen, die jeweils paarweise teilerfremd, relativ prim und von einem Sensor (25) abtastbar sind,
wobei die Maßverkörperungen (10, 11, 12, 13, 14, 15, 16, 20, 21, 22, 23) zustandssynchron angeordnet sind,
**dadurch gekennzeichnet, dass** die Maßverkörperungen (10, 11, 12, 13, 14, 15, 16, 20, 21, 22, 23) teilweise ein Vielfaches der erforderlichen Teilung zur Bestimmung der Zustände aufweisen.

8. Vorrichtung zur Erfassung einer einschaltunabhängigen Drehposition einer Welle (30, 33) nach Anspruch 7
**dadurch gekennzeichnet,**
**dass** zumindest einzelne Maßverkörperungen (10, 11, 12, 13, 14, 15, 16, 20, 21, 22, 23) kaskadiert angeordnet sind.

9. Vorrichtung nach Anspruch 7 oder 8,
**dadurch gekennzeichnet,**
**dass** eine Zustandsermittlung der einzelnen Maßverkörperungen (10, 11, 12, 13, 14, 15, 16, 20, 21, 22, 23, 31, 34) durch Sensoren (25) erfolgt, wobei jede Maßverkörperung (10, 11, 12, 13, 14, 15, 16, 20, 21, 22, 23, 31, 34) durch eine quantisierbare Zahl an rotatorischen Zuständen Nᵢ definiert ist, und /oder dass der Gesamtmessbereich durch das Produkt $N = {π}_{ι = 1}^{n} {N}_{i}$ der möglichen Zustände aller Maßverkörperungen (10, 11, 12, 13, 14, 15, 16, 20, 21, 22, 23, 31, 34) bestimmt ist.

10. Vorrichtung nach einem der Ansprüche 7 bis 9,
**dadurch gekennzeichnet,**
**dass** jede Zustandskombination (a₀, a₁, a₂,..., aₙ) innerhalb des Gesamtmessbereiches N exakt einmal vorkommt, sodass zu jedem Zeitpunkt aus der Zustandskombination der Maßverkörperungen (10, 11, 12, 13, 14, 15, 16, 20, 21, 22, 23, 31, 34) die absolute Position der Welle (30, 33) ermittelbar ist.

11. Vorrichtung nach einem der Ansprüche 7 bis 10,
**dadurch gekennzeichnet,**
**dass** drei oder vier rotatorische Maßverkörperungen (10, 11, 12, 13, 14, 15, 16, 20, 21, 22, 23, 31, 34) mit der Welle (30, 33) gekoppelt sind, und/oder dass eine direkte synchrone oder schlupffreie Kopplung der Maßverkörperungen (10, 11, 12, 13, 14, 15, 16, 20, 21, 22, 23, 31, 34) mit der Welle (30, 33) vorliegt.

12. Vorrichtung nach einem der Ansprüche 7 bis 11,
**dadurch gekennzeichnet,**
**dass** eine absolute Positionsbestimmung nach Stillstand oder Spannungsausfall über die Zustandskombination (a₀, a₁, a₂,..., aₙ) ermittelbar ist, und/oder dass die absolute Position der Welle (30, 33) durch einen tabellarischen Vergleich über die Zustandskombination (a₀, a₁, a₂,..., aₙ) ermittelbar ist.

13. Vorrichtung nach einem der Ansprüche 7 bis 12,
**dadurch gekennzeichnet,**
**dass** die Maßverkörperungen (10, 11, 12, 13, 14, 15, 16, 20, 21, 22, 23, 31, 34) aus Permanentmagneten (24) oder signalbeeinflussenden Elementen bestehen, und/oder dass die Zustände der Maßverkörperungen (10, 11, 12, 13, 14, 15, 16, 20, 21, 22, 23, 31, 34) durch optische, kapazitive, induktive oder widerstandsbehaftete Sensoren (25) auswertbar sind.

14. Vorrichtung nach einem der Ansprüche 7 bis 13,
**dadurch gekennzeichnet,**
**dass** die Maßverkörperung in Form eines Zahnrades (37, 38, 39, 40, 43, 44, 45, 46) aus einzelnen Winkelsegmenten zusammengesetzt und mit einer Welle (30, 33) verbunden ist, und/oder dass die Maßverkörperung in Form eines Zahnrades (37, 38, 39, 40, 43, 44, 45, 46) unabhängig von dem Durchmesser der Welle (30, 33) ist.

15. Vorrichtung nach einem der Ansprüche 7 bis 14,
**dadurch gekennzeichnet,**
**dass** die Maßverkörperung (10, 11, 12, 13, 14, 15, 16, 20, 21, 22, 23, 31, 34) aus Sensorzahnrädern mit einer unterschiedlichen Anzahl von Zähnen als Teilung besteht, oder dass die Maßverkörperung (10, 11, 12, 13, 14, 15, 16, 20, 21, 22, 23, 31, 34) aus einer Kodierscheibe mit einer unterschiedlichen Anzahl von signalerzeugenden Elementen als Teilung besteht.

## Claims

1. A method for detecting the absolute rotational position of a shaft (30, 33) using at least two rotary measuring elements (10, 11, 12, 13, 14, 15, 16, 20, 21, 22, 23, 31, 34) which are synchronously coupled to the shaft (30, 33), comprising measuring elements (10, 11, 12, 13, 14, 15, 16, 20, 21, 22, 23, 31, 34) each having a different number of divisions, which are mutually coprime in pairs, a determination of the state of the individual measurement elements (10, 11, 12, 13, 14, 15, 16, 20, 21, 22, 23, 31, 34) by sensors (25), whereby a quantisable number of rotational states Ni is recorded for each measurement entity (10, 11, 12, 13, 14, 15, 16, 20, 21, 22, 23, 31, 34) a quantisable number of rotational states Ni is detected, and the total measurement range of the detection system is defined by the product $N = {π}_{ι = 1}^{n} {N}_{i}$ of the possible states of all measurement entities (10, 11, 12, 13, 14, 15, 16, 20, 21, 22, 23, 31, 34) and each state combination (a₀, a₁, a₂, ..., a_n) occurs exactly once within the total measurement range N, so that at any given time, the absolute position of the shaft (30, 33) can be determined from the state combination of the measurement elements (10, 11, 12, 13, 14, 15, 16, 20, 21, 22, 23, 31, 34) can be used to determine the absolute position of the shaft (30, 33), wherein the measurement elements (10, 11, 12, 13, 14, 15, 16, 20, 21, 22, 23, 31, 34) are operated in a state-synchronised manner,
**characterised in** th , that the measurement elements (10, 11, 12, 13, 14, 15, 16, 20, 21, 22, 23, 31, 34) have, in some cases, a pitch that is a multiple of that required to determine the states.

2. A method according to claim 1,
**characterised in**
**in that** at least some of the measurement bodies (10, 11, 12, 13, 14, 15, 16, 20, 21, 22, 23, 31, 34) are used in cascade.

3. A method according to claim 1 or 2,
**characterised in**
**that** three or more rotary measuring elements (10, 11, 12, 13, 14, 15, 16, 20, 21, 22, 23, 31, 34) are coupled to the shaft (30, 33), and/or that there is a direct synchronous or slip-free coupling of the measuring elements (10, 11, 12, 13, 14, 15, 16, 20, 21, 22, 23, 31, 34) to the shaft (30, 33).

4. A method according to claim 1, 2 or 3,
**characterised in that**,
that the absolute position of the shaft (30, 33) is determined by calculation using the state combination (a₀, a₁,a₂, ..., aₙ), and/or that the absolute position is determined following a standstill or a power failure using the state combination (a₀, a_{(1),}a₂ ,..., aₙ ) is determined.

5. A method according to any one of claims 1, 2, 3 or 4,
**characterised in**
**that** the measuring elements (10, 11, 12, 13, 14, 15, 16, 20, 21, 22, 23, 31, 34) consist of permanent magnets (24) or elements that influence the signal, and/or that the states of the measuring elements (10, 11, 12, 13, 14, 15, 16, 20, 21, 22, 23, 31, 34) are evaluated by optical, capacitive, inductive or resistive sensors (25).

6. A method according to any one of claims 1 to 5,
in which the measuring elements (10, 11, 12, 13, 14, 15, 16, 20, 21, 22, 23, 31, 34) consists of sensor gear wheels (37, 38, 39, 40, 43, 44, 45, 46) with a varying number of teeth (47) as the pitch, or in that the measuring element (10, 11, 12, 13, 14, 15, 16, 20, 21, 22, 23, 31, 34) consists of a coding disc with a varying number of signal-modified elements as the pitch.

7. A device for detecting the rotational position of a shaft (30, 33) independently of power-up, comprising at least one housing (2) with a manually rotatable hollow shaft (6), the absolute rotational position of which is to be determined, wherein the rotational position of the hollow shaft (6) can be transmitted via actuators to a production line to be controlled, and wherein direct coupling of the hollow shaft (6) takes place with at least two measuring elements (10, 11, 12, 13, 14, 15, 16, 20, 21, 22, 23) of the device, which have a different number of divisions, each pair of which is mutually coprime, relatively prime and detectable by a sensor (25),
wherein the measuring elements (10, 11, 12, 13, 14, 15, 16, 20, 21, 22, 23, 31, 34) are arranged in a state-synchronised manner,
**characterised in that** the measurement elements (10, 11, 12, 13, 14, 15, 16, 20, 21, 22, 23, 31, 34) have, in some cases, a pitch that is a multiple of that required to determine the states.

8. Device for detecting a rotational position of a shaft (30, 33) independent of power-on, as per claim 7
**characterised in**
**that** at least some of the measuring elements (10, 11, 12, 13, 14, 15, 16, 20, 21, 22, 23) are arranged in cascade.

9. A device according to claim 7 or 8,
**characterised in**
**that** the state of the individual measuring elements (10, 11, 12, 13, 14, 15, 16, 20, 21, 22, 23, 31, 34) is carried out by sensors (25), wherein each measurement entity (10, 11, 12, 13, 14, 15, 16, 20, 21, 22, 23, 31, 34) is defined by a quantisable number of rotational states Nᵢ and/or that the total measuring range is determined by the product $N = {π}_{ι = 1}^{n} {N}_{i}$ of the possible states of all measurement entities (10, 11, 12, 13, 14, 15, 16, 20, 21, 22, 23, 31, 34).

10. A device according to any one of claims 7 to 9,
**characterised in**
**that** each state combination (a₀, a₁,a₂, ..., aₙ) occurs exactly once within the total measurement range N, so that at any given time the absolute position of the shaft (30, 33) can be determined from the state combination of the measuring elements (10, 11, 12, 13, 14, 15, 16, 20, 21, 22, 23, 31, 34) can be used to determine the absolute position of the shaft (30, 33).

11. A device according to any one of claims 7 to 10,
**characterised in that**,
that three or four rotational measuring elements (10, 11, 12, 13, 14, 15, 16, 20, 21, 22, 23, 31, 34) are coupled to the shaft (30, 33), and/or that there is a direct synchronous or slip-free coupling of the measuring elements (10, 11, 12, 13, 14, 15, 16, 20, 21, 22, 23, 31, 34) to the shaft (30, 33).

12. A device according to any one of claims 7 to 11,
**characterised in**
**that** an absolute position can be determined following a standstill or power failure via the state combination (a₀, a_{(1),}a₂ ,..., aₙ ) and/or that the absolute position of the shaft (30, 33) can be determined by a tabular comparison based on the state combination (a₀ , a_{1,} a₂ ,..., aₙ ).

13. A device according to any one of claims 7 to 12,
**characterised in**
**that** the measurement elements (10, 11, 12, 13, 14, 15, 16, 20, 21, 22, 23, 31, 34) consist of permanent magnets (24) or elements that influence the signal, and/or that the states of the measurement elements (10, 11, 12, 13, 14, 15, 16, 20, 21, 22, 23, 31, 34) can be evaluated by optical, capacitive, inductive or resistive sensors (25).

14. A device according to any one of claims 7 to 13,
**characterised in**
**that** the measuring element in the form of a gear wheel (37, 38, 39, 40, 43, 44, 45, 46) is composed of individual angular segments and is connected to a shaft (30, 33), and/or that the measuring element in the form of a gear wheel (37, 38, 39, 40, 43, 44, 45, 46) is independent of the diameter of the shaft (30, 33).

15. A device according to any one of claims 7 to 14,
**characterised in that**,
that the measurement element (10, 11, 12, 13, 14, 15, 16, 20, 21, 22, 23, 31, 34) consists of sensor gears with a varying number of teeth per pitch, or that the measurement element (10, 11, 12, 13, 14, 15, 16, 20, 21, 22, 23, 31, 34) consists of an encoding disc with a varying number of signal-generating elements as its pitch.

## Revendications

1. Procédé de détection d'une position de rotation absolue d'un arbre (30, 33) en utilisant au moins deux étalons de rotation (10, 11, 12, 13, 14, 15, 16, 20, 21, 22, 23, 31, 34) couplés de manière synchrone avec l'arbre (30, 33), comportant des étalons (10, 11, 12, 13, 14, 15, 16, 20, 21, 22, 23, 31, 34) présentant un nombre différent de divisions qui sont par paires, premières entre elles, relativement primaires, une détection d'état des différents étalons (10, 11, 12, 13, 14, 15, 16, 20, 21,22, 23, 31, 34) par des capteurs (25), dans lequel pour chacun des étalons (10, 11, 12, 13, 14, 15, 16, 20, 21, 22, 23, 31, 34), un chiffre quantifiable d'états de rotation Ni est perçu, la plage de mesure totale du système de détection étant déterminée par le produit $N = {π}_{ι = 1}^{n} {N}_{i}$ Nᵢ des états possibles de l'ensemble des étalons (10, 11, 12, 13, 14, 15, 16, 20, 21, 22, 23, 31, 34) et chaque combinaison d'états (a₀, a₁, a₂,..., aₙ) se présente exactement une fois au sein de la plage de mesure totale N, de manière qu'à tout moment, la position absolue de l'arbre (30, 33) est calculable à partir de la combinaison d'états des étalons (10, 11, 12, 13, 14, 15, 16, 20, 21, 22, 23, 31, 34), les étalons (10, 11, 12, 13, 14, 15, 16, 20, 21, 22, 23, 31, 34) étant utilisés de manière synchrone par rapport à l'état, **caractérisé en ce que** les étalons (10, 11, 12, 13, 14, 15, 16, 20, 21, 22, 23, 31, 34) présentent en partie un multiple de la division nécessaire à la détermination des états.

2. Procédé selon la revendication 1,
**caractérisé en ce qu'**au moins certains étalons (10, 11, 12, 13, 14, 15, 16, 20, 21, 22, 23, 31, 34) sont utilisés en cascade.

3. Procédé selon la revendication 1 ou 2,
**caractérisé en ce que** trois ou plusieurs étalons de rotation (10, 11, 12, 13, 14, 15, 16, 20, 21, 22, 23, 31, 34) sont couplés avec l'arbre (30, 33), et / ou **en ce qu'**il y a un couplage direct synchrone ou un couplage des étalons (10, 11, 12, 13, 14, 15, 16, 20, 21, 22, 23, 31, 34) sans glissement avec l'arbre (30, 33).

4. Procédé selon la revendication 1, 2 ou 3,
**caractérisé en ce que** la position absolue de l'arbre (30, 33) est calculée à partir de la combinaison d'états (a₀, a₁, a₂, ..., aₙ) et / ou **en ce qu'**une détermination de position absolue est calculée selon arrêt ou mise hors tension à partir de la combinaison d'états (a₀, a₁, a₂, ..., aₙ).

5. Procédé selon l'une des revendications 1, 2, 3 ou 4,
**caractérisé en ce que** les étalons (10, 11, 12, 13, 14, 15, 16, 20, 21, 22, 23, 31, 34) sont des aimants permanents (24) ou des éléments influant sur les signaux, et / ou en ce que les états des étalons (10, 11, 12, 13, 14, 15, 16, 20, 21, 22, 23, 31, 34) sont dépouillés à l'aide de capteurs (25) optiques, capacitifs, inductifs ou résistifs.

6. Procédé selon l'une des revendications 1 à 5,
**caractérisé en ce que** l'étalon (10, 11, 12, 13, 14, 15, 16, 20, 21, 22, 23, 31, 34) est constitué par des roues dentées de capteurs (37, 38, 39, 40, 43, 44, 45, 46) comportant un nombre différent de dents (47) comme division, ou **en ce que** l'étalon (10, 11, 12, 13, 14, 15, 16, 20, 21, 22, 23, 31, 34) est un disque de codage comportant un nombre différent d'éléments à signal modifié comme division.

7. Dispositif de détection d'une position de rotation d'un arbre (30, 33) indépendante de la mise sous tension, comportant au moins un boîtier (2) ayant un arbre creux (6) orientable manuellement dont la position de rotation absolue est à repérer; la position de rotation de l'arbre creux (6) pouvant être transmise, par l'intermédiaire d'actionneurs, à une unité de production à commander et l'arbre creux (6) étant couplé directement avec au moins deux étalons (10, 11, 12, 13, 14, 15, 16, 20, 21, 22, 23) du dispositif, qui présentent un nombre différent de divisions, lesquelles sont chacune, par paires, premières entre elles, relativement primaires et susceptibles d'être palpées par un capteur (25),
les étalons (10, 11, 12, 13, 14, 15, 16, 20, 21, 22, 23) étant disposés de manière synchrone par rapport à l'état, **caractérisé en ce que** les étalons (10, 11, 12, 13, 14, 15, 16, 20, 21, 22, 23) présentent en partie un multiple de la division nécessaire à la détermination des états.

8. Dispositif de détection d'une position de rotation d'un arbre (30, 33) indépendante de la mise sous tension. **caractérisé en ce qu'** au moins certains étalons (10, 11, 12, 13, 14, 15, 16, 20, 21, 22, 23) sont disposés en cascade.

9. Dispositif selon la revendication 7 ou 8,
**caractérisé en ce que** l'état des différents étalons (10, 11, 12, 13, 14, 15, 16, 20, 21, 22, 23, 31, 34) est détecté par des capteurs (25), chaque étalon (10, 11, 12, 13, 14, 15, 16, 20, 21, 22, 23, 31, 34) étant défini par un nombre quantifiable d'états de rotation Ni, et / ou **en ce que** la plage totale de mesure est déterminée par le produit $N = {π}_{ι = 1}^{n} {N}_{i}$ Nᵢ es états possibles de l'ensemble des étalons (10, 11, 12, 13, 14, 15, 16, 20, 21, 22, 23, 31, 34).

10. Dispositif selon l'une quelconque des revendications 7 à 9,
**caractérisé en ce que** chaque combinaison d'états (a₀, a₁, a₂, ..., aₙ) se présente exactement une fois au sein de la plage de mesure totale N, de manière qu'à tout moment, la position absolue de l'arbre (30, 33) est repérable à partir de la combinaison d'états des étalons (10, 11, 12, 13, 14, 15, 16, 20, 21, 22, 23, 31, 34).

11. Dispositif selon l'une quelconque des revendications 7 à 10,
**caractérisé en ce que** trois ou quatre étalons de rotation (10, 11, 12, 13, 14, 15, 16, 20, 21, 22, 23, 31, 34) sont couplés avec l'arbre (30, 33) et / ou **en ce qu'**il y a un couplage direct synchrone ou un couplage des étalons (10, 11, 12, 13, 14, 15, 16, 20, 21, 22, 23, 31, 34) sans glissement avec l'arbre (30, 33).

12. Dispositif selon l'une quelconque des revendications 7 à 11,
**caractérisé en ce que** la position absolue après arrêt ou mise hors tension est calculable à partir de la combinaison d'états (a₀, a₁, a₂, ..., aₙ), et / ou **en ce que** la position absolue de l'arbre (30, 33) est calculable par l'intermédiaire d'une comparaison tabulaire à partir de la combinaison d'états (a₀, a₁, a₂, ..., aₙ).

13. Dispositif selon l'une quelconque des revendications 7 à 12,
**caractérisé en ce que** les étalons (10, 11, 12, 13, 14, 15, 16, 20, 21, 22, 23, 31, 34) sont des aimants permanents (24) ou des éléments influant sur les signaux, et / ou en ce que les états des étalons (10, 11, 12, 13, 14, 15, 16, 20, 21, 22, 23, 31, 34) sont évaluables à l'aide de capteurs (25) optiques, capacitifs, inductifs ou résistifs.

14. Dispositif selon l'une quelconque des revendications 7 à 13,
**caractérisé en ce que** l'étalon sous forme d'une roue dentée (37, 38, 39, 40, 43, 44, 45, 46) est composé de segments d'angles individuels et relié à un arbre (30, 33), et / ou **en ce que** l'étalon sous forme d'une roue dentée (37, 38, 39, 40, 43, 44, 45, 46) est indépendant du diamètre de l'arbre (30, 33).

15. Dispositif selon l'une quelconque des revendications 7 à 14,
**caractérisé en ce que** l'étalon (10, 11, 12, 13, 14, 15, 16, 20, 21, 22, 23, 31, 34) se compose de roues dentées de capteurs comportant un nombre différent de dents comme division, ou **en ce que** l'étalon (10, 11, 12, 13, 14, 15, 16, 20, 21, 22, 23, 31, 34) est un disque de codage comportant un nombre différent d'éléments générateurs de signaux comme division.
